# EUROPEAN PATENT APPLICATION

(11) **EP 2 658 027 A1**
(43) Date of publication of application: **30.10.2013**
(21) Application number: 11860870.2
(22) Date of filing: 27.12.2011
(51) Int. Cl.: H01M 10/42, H01M 10/44, H01M 10/48, H02H 7/18, H02J 7/00, H01M 8/00

(54) **POWER SUPPLY SYSTEM**

(30) Priority: 14.03.2011 JP 2011055388; 14.03.2011 JP 2011055389
(71) Applicant: Sanyo Electric Co., Ltd., Osaka 570-8677 (JP)
(72) Inventor: MATSUMURA, Kohji, Moriguchi-shi Osaka 570-8677 (JP); HAGIWARA, Ryuzo, Moriguchi-shi Osaka 570-8677 (JP); IKEBE, Hayato, Moriguchi-shi Osaka 570-8677 (JP); YAMAGUCHI, Masao, Moriguchi-shi Osaka 570-8677 (JP); HARADA, Takanori, Moriguchi-shi Osaka 570-8677 (JP); ABE, Takayoshi, Moriguchi-shi Osaka 570-8677 (JP); OTSUKI, Yosuke, Moriguchi-shi Osaka 570-8677 (JP)
(74) Representative: Klunker . Schmitt-Nilson . Hirsch
(86) International application number: PCT/JP2011/080249
(87) International publication number: WO 2012/124238

(57) **Abstract**

A power supply system comprises: a battery pack 44 that outputs at least one of a status signal and an abnormal signal; a switch circuit 30 for connecting a storage battery control group to a power input/output line; and a sub-controller 24 that receives at least one of the status signal and the abnormal signal from the battery pack 44 and controls the switch circuit 30 by outputting a control signal to the switch circuit 30. At least part of communication between the sub-controller 24 and the battery pack 44 and at least part of communication between the sub-controller 24 and the switch circuit 30 are performed using optical fibers.

## Description

### TECHNICAL FIELD

The present invention generally relates to a power supply system including a storage battery.

### BACKGROUND ART

A power supply system has begun to be used in which a commercial power supply and a storage battery are combined in order to efficiently utilize power. That is, depending on temporal variation of a load, discharge power from the storage battery is supplied in addition to power from the commercial power supply when the load is large, and the storage battery is charged with power from the commercial power supply when the load is small, to temporally average the power supply from the commercial power supply. Further, a photovoltaic power generation system and a fuel cell system, which have been recently developed, are also combined with the power supply system.

Such a power supply system is provided with a switch circuit for connecting the storage battery to wiring for charge and discharge and a controller for controlling a switch included in the switch circuit to be opened and closed. The controller receives from each storage battery an alarm signal for informing on an output voltage, output current, temperature and abnormality, and controls the switch circuit depending on the information.

### SUMMARY OF INVENTION

### TECHNICAL PROBLEM

The power supply system of related art has a communication line of metal wiring which connects between each storage battery, the switch circuit and the controller. In the case of using the metal wiring, when the number of the stages connected in series of the storage battery is increased to increase the output voltage, this is likely to cause a problem of noise superimposition or insulation deterioration which is caused by switching such as connection to and disconnection from the wiring of the storage battery and the like.

In addition, in the case of an emergency situation of the storage battery, such as an earth fault or abnormal heat generation, the storage battery needs to be adequately and quickly handled, such as by disconnection.

### SOLUTION TO PROBLEM

It is an advantage of the present invention to provide a power supply system including a storage battery pack that includes at least one storage battery cell, and outputs a status signal indicating a state of the storage battery cell and an abnormal signal indicating abnormality, a controller that receives the status signal and the abnormal signal from the storage battery pack, and controls charge-discharge of the storage battery pack, a first communication line for sending a request signal and the status signal from the controller to the storage battery pack, the request signal requesting the storage battery pack to send the status information, and a second communication line for sending the abnormal signal from the storage battery pack to the controller and provided separately from the first communication line.

### ADVANTAGEOUS EFFECT OF INVENTION

The present invention can improve reliability of a power supply system using a storage battery.

### BRIEF DESCRIPTION OF DRAWINGS

[FIG. 1] FIG. 1 is a diagram showing an overall configuration of a power supply system according to an embodiment of the present invention.
[FIG. 2] FIG. 2 is a diagram showing a configuration of the power supply system according to an embodiment of the present invention.
[FIG. 3] FIG. 3 is a diagram showing a configuration of a storage battery unit according to an embodiment of the present invention.
[FIG. 4] FIG. 4 is a diagram showing a configuration of the storage battery unit according to an embodiment of the present invention.
[FIG. 5] FIG. 5 is a diagram showing a configuration of a control system of a storage battery pack in a first communication system.
[FIG. 6] FIG. 6 is a diagram showing a configuration of a control system of a sub-controller in the first communication system.
[FIG. 7] FIG. 7 is a diagram showing a connection configuration of communication lines between a sub-controller and storage battery packs in the first communication system.
[FIG. 8] FIG. 8 is a diagram showing a configuration of a control system of a storage battery pack in a second communication system.
[FIG. 9] FIG. 9 is a diagram showing a configuration of a control system of a sub-controller in the second communication system.
[FIG. 10] FIG. 10 is a diagram showing a configuration of a control system of a switch circuit in the second communication system.
[FIG. 11] FIG. 11 is a diagram showing a connection configuration of a communication line between the sub-controller, the switch circuit and the storage battery pack in the second communication system.
[FIG. 12] FIG. 12 is a diagram showing a configuration of a control system of a storage battery pack in a third communication system.
[FIG. 13] FIG. 13 is a diagram showing a configuration of a control system of a sub-controller in the third communication system.
[FIG. 14] FIG. 14 is a diagram showing a connection configuration of communication lines between the sub-controller, a switch circuit and storage battery packs in the third communication system.
[FIG. 15] FIG. 15 is a diagram showing a configuration of a control system of a storage battery pack in a fourth communication system.
[FIG. 16] FIG. 16 is a diagram showing a configuration of a control system of a sub-controller in the fourth communication system.
[FIG. 17] FIG. 17 is a diagram showing a connection configuration of communication lines between the sub-controller, a switch circuit and storage battery packs in the fourth communication system.
[FIG. 18] FIG. 18 is a diagram showing a configuration of a power supply system according to an embodiment of the present invention.

### DESCRIPTION OF EMBODIMENTS

### <First embodiment>

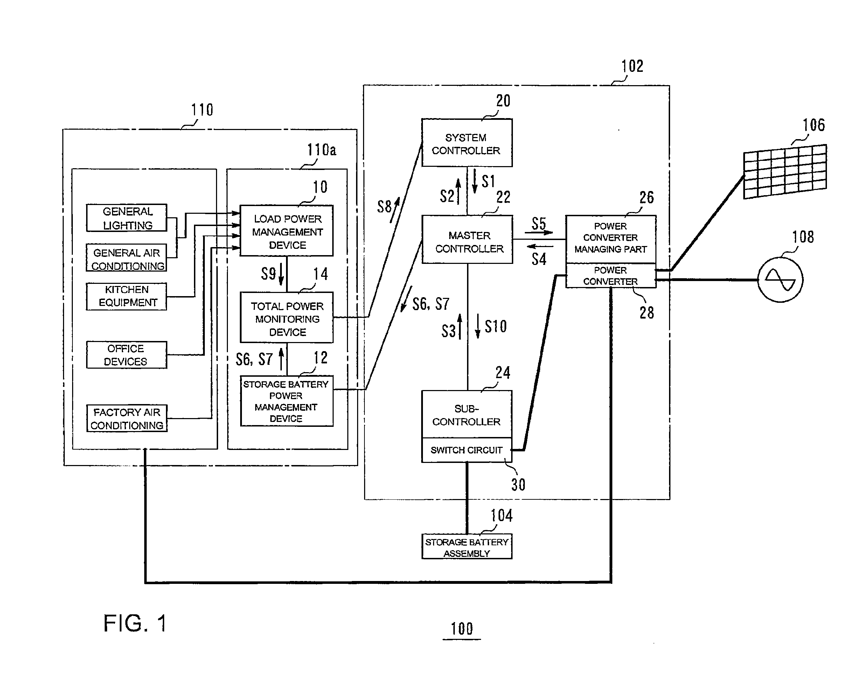

A power supply system 100 according to an embodiment of the present invention includes a power supply management system 102, a storage battery assembly 104, a photovoltaic cell system 106 and a grid power source 108, as shown in FIG. 1. The power supply system 100 is used for supplying power to a load 110. Here, a bold solid line represents a flow of power and a thin solid line represents a flow of signals in FIG. 1.

In this embodiment, the photovoltaic cell system 106 and the grid power source 108 are a source of power. The grid power source 108 is a single-phase or three-phase power source, and may be supplied with power in combination with power generated by a variety of power generation methods including hydroelectric power generation, nuclear power generation and thermal power generation from an external power company. Additionally, the photovoltaic cell system 106 may be a large scale photovoltaic power generation system of 1 MW, for example. However, the power source is not limited thereto, and may include a fuel cell or other renewable energy source, such as a wind powered generator system and the like.

The power supply management system 102 includes a system controller 20, a master controller 22, a sub-controller 24, a power converter managing part 26 and a power converter 28, as shown in FIG. 1. The power supply management system 102 is configured as a hierarchical control system in which control is hierarchized from an upper phase toward a lower phase in an order of the system controller 20, the master controller 22, the sub-controller 24 and the power converter managing part 26.

The system controller 20 has functionality for integrally managing power for the power supply system 100. The master controller 22 is a control device which receives an overall charge-discharge control command S1 from the system controller 20 and controls charge- discharge of the entire storage battery assembly 104 as one unit. The power converter managing part 26 controls processes such as power conversion and voltage conversion in each power converter 28. The sub-controller 24 is provided for each of the storage battery units 40 included in the storage battery assembly 104, and controls charge-discharge in each storage battery unit 40.

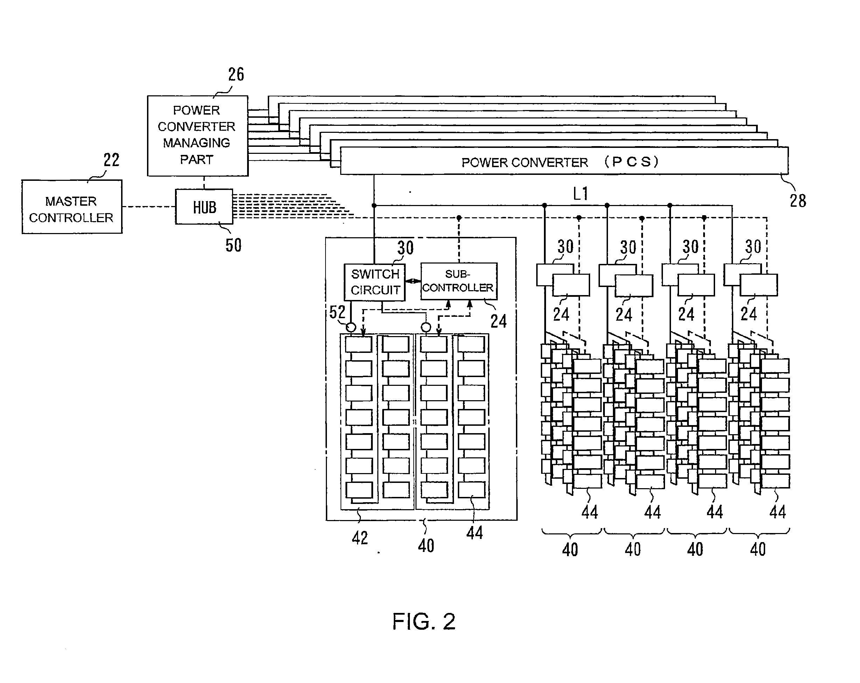

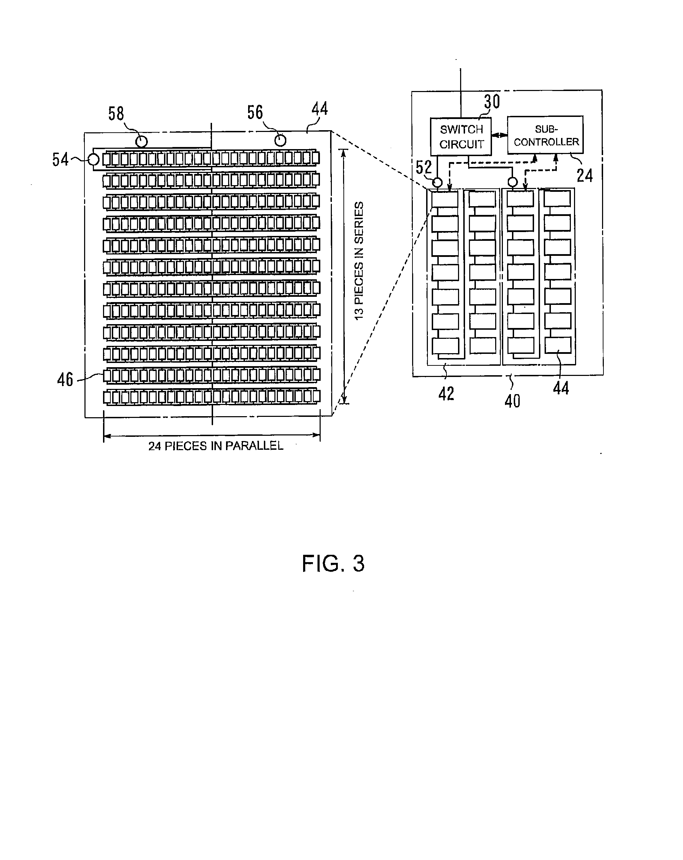

The storage battery assembly 104 is provided in order to supply power in accordance with power required by the load 110. The storage battery assembly 104 is hierarchically constituted by, as illustrated in FIG. 2 and FIG. 3, a storage battery pack 44 having a combination of a plurality of storage battery cells 46, a storage battery control group 42 having a combination of a plurality of storage battery packs 44, and the storage battery unit 40 having a combination of a plurality of storage battery control groups 42, for example.

As shown in FIG. 2, the storage battery assembly 104 includes a plurality of assemblies combined, each of which has a plurality of storage battery units 40 connected in parallel. Each assembly is connected with the power converter 28, and the power converter 28 manages power for the storage battery unit 40. Here, a power line is represented by a solid line and a signal line is represented by a broken line in FIG. 2. The signal line between the master controller 22 and the power converter managing part 26, and the signal line between the master controller 22 and the sub-controller 24 are connected via a HUB 50. Metal wiring is generally used for the signal line between the master controller 22 and the sub-controller 24.

FIG. 3 shows in detail a configuration of one of the storage battery units 40 extracted from those in FIG. 2. One storage battery unit 40 includes the storage battery control groups (storage battery pack row) 42 connected in parallel as necessary, each group being constituted by the storage battery packs 44 connected in series as necessary. In the example in FIG. 3, one storage battery unit 40 includes two storage battery control groups 42 connected in parallel, in which each of the storage battery control groups 42 is formed of 14 storage battery packs 44 connected in series. In this embodiment, one storage battery unit 40 includes 24 storage battery packs 44.

Further, an internal configuration of one storage battery pack 44 is shown in an enlarged manner in FIG. 3. In this embodiment, one storage battery pack 44 includes 13 Assemblies connected in series, each Assembly having 24 storage battery cells 46 connected in parallel. That is, each storage battery pack 44 is constituted by 312 (= 24 x 13) storage battery cells 46.

Here, the respective numbers of the storage battery cells 46, storage battery packs 44, storage battery control groups 42 and storage battery units 40 to be combined may be appropriately changed according to a specification of the power supply system 100. Moreover, a lithium-ion battery may be used as the storage battery, but other secondary batteries may be applied. For example, a nickel hydride battery, nickel-cadmium battery, manganese battery and the like may be applied.

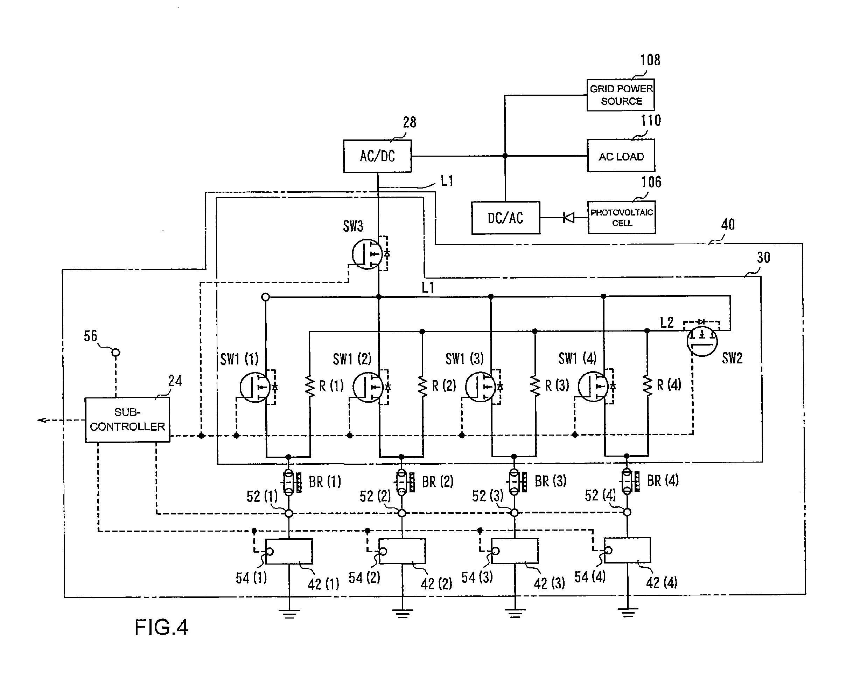

One storage battery unit 40 is connected with one sub-controller 24 and one switch circuit 30. In the switch circuit 30, one selecting switch SW1 is provided for each storage battery control group 42 as shown in FIG. 4. The storage battery control group 42 is connected to a power input/output line L1 via the selecting switch SW1. The selecting switch SW1 is controlled to be opened and closed in response to an open/close control signal from the sub-controller 24. That is, the storage battery control group 42 is the minimum unit for controlling when connecting the storage battery to the power input/output line L1.

Furthermore, the storage battery control groups 42 (42(1) to 42(4)) included in one storage battery unit 40 are connected with a charge-discharge line L2 via resistances R (R(1) to R(4)) as shown in FIG. 4. This allows a charge-discharge current to flow mutually between the storage battery control groups 42 (42(1) to 42(4)) via the resistances R (R(1) to R(4)) to equalize charged states of the storage battery control groups 42 (42(1) to 42(4)). Additionally, a switch SW2 is provided between the power input/output line L1 and the charge-discharge line L2 to allow charge and discharge between the storage battery control groups 42 (42(1) to 42(4)) via the power input/output line L1 and the charge-discharge line L2. Here, the storage battery control groups 42 (42(1) to 42(4)) are connected respectively via breakers BR (BR(1) to BR(4)) to the power input/output line L1 and the charge-discharge line L2.

The storage battery unit 40 is provided with a storage battery current sensor 52, a storage battery voltage sensor 54, a temperature sensor 56 and an earth fault detection sensor 58. The storage battery current sensor 52 is provided for each storage battery control group 42 or each storage battery pack 44, the current of each of which the storage battery current sensor 52 detects. The storage battery voltage sensor 54 is provided for each storage battery control group 42, each storage battery pack 44, or each of the parallel assemblies, each including the storage battery cells 46 connected in series in storage battery pack 44 (assembly including 24 storage battery cells 46 connected in parallel). This allows detection of a voltage for each storage battery control group 42, a voltage for each storage battery pack 44, and a voltage between terminals of the parallel assembly of storage battery cells 46. Here, for the purpose of simplifying showing the figure, only one of the storage battery current sensor 52 and the storage battery voltage sensor 54 are respectively shown in FIG. 3. Further, a temperature of the storage battery pack 44 is detected as a pack temperature by the temperature sensor 56. A plurality of temperature sensors 56 may be provided for each storage battery pack 44. Moreover, the storage battery unit 40 may be provided with the earth fault detection sensor 58. The earth fault detection sensor 58 is preferably provided for each storage battery pack 44. The earth fault detection sensor 58 is a sensor for detecting that an earth fault has occurred in the storage battery cell 46 included in the storage battery pack 44.

In addition, the storage battery unit 40 may be provided with an air-cooling fan for removing heat, and may be provided with a rotation sensor (not shown) for detecting a rotational speed of the air-cooling fan. Since the air-cooling fan is generally provided for each storage battery unit 40, the rotation sensor is also preferably provided for each storage battery unit 40.

The power supply system 100 for charging and discharging the storage battery assembly 104 that has the configuration like this supplies power to the load 110 including general lighting, general air conditioning, kitchen equipment, a display case, an air conditioning facility and the like in a factory facility.

The load 110 is provided with a power management device 110a. The power management device 110a includes a load power management device 10, a storage battery power management device 12 and a total power monitoring device 14.

The load power management device 10 acquires load side information data S9 indicating power required by the load 110 from the load 110. The load side information data S9 has an entire required power demand of the load 110 which is required for enabling the system controller 20 described later to set an entire charge-discharge control command S1. As shown in FIG. 1, when the load 110 is divided into four systems, the load power management device 10 may be an assembly having internally four systems of the load power management devices.

The storage battery power management device 12 receives unit status data S6 indicating a state of each storage battery unit 40 included in the storage battery assembly 104 and power converter management data S7 indicating a state of each power converter 28 included in the power supply management system 102. The storage battery power management device 12 transfers the information to the total power monitoring device 14. The unit status data S6 contains information utilized for generating the entire charge-discharge control command S1. Further, the unit status data S6 contains data of the storage batteries constituting the storage battery assembly 104 such as the voltage, temperature, current, SOC and the like, as well as information indicating abnormality of the storage battery unit 40 constituting the storage battery assembly 104 if any occurs. Moreover, the power converter management data S7 contains information concerning abnormality of the power converter 28 relating to setting of the entire charge-discharge control command S1. For example, when a failure occurs in any power converter 28 included in the storage battery assembly 104, information for specifying the power converter 28 having the failure is contained in the data S7.

The total power monitoring device 14 receives the load side information data S9 from the load power management device 10, and the unit status data S6 and power converter management data S7 from the storage battery power management device 12 to extract from the information the data required for the charge-discharge control. The total power monitoring device 14 outputs the extracted information as a system management signal S8 to the system controller 20.

Hereinafter, a description will be given of a control for each component in the power supply management system 102. The system controller 20 receives from the power management device 110a the load side information data S9 and the system management signal S8 containing the storage battery information signal unit status data S6, generates, on the basis of the information, the entire charge-discharge control command S1 as the charge-discharge control command with respect to the entire power supply system 100, and outputs the command S1.

Specifically, the system controller 20 finds, taking into consideration the states of the storage battery unit 40 and power converter 28, a charge-discharge state satisfying the entire required power demand of the load 110 from a charge-discharge capacity of the storage battery assembly 104, and sends the found state as the entire charge-discharge control command S1 to the master controller 22. Further, the system controller 20 preferably finds, also taking into consideration information concerning the charge-discharge state of a storage battery unit 40 connected with a power converter 28 having a failure and the charge-discharge state of a storage battery unit 40 having a failure, the charge-discharge satisfying the entire required power demand of the load 110 from the charge-discharge capacity of the storage battery assembly 104, and transfers the found states as the entire charge-discharge control command S1 to the master controller 22.

In the entire charge-discharge control command S1, a charge-discharge condition is expressed using a power energy and a time period such as "charge at XX kW for YY seconds". In addition, a charge upper limit voltage may be specified with "charge at XX kW until voltage becomes ZZ V", a discharge lower limit voltage may be specified with "discharge until ZZ V", and the SOC may be specified to command charge-discharge. Here, the SOC is defined such that the SOC (state of charge) is 100 in a state where power is stored to the maximum extent in a practical range, and the SOC (state of charge) is zero in a state where power is stored to the minimum extent, which are used as a reference to express the SOC (state of charge) in percentage for each state of power storage.

Additionally, in the case where the discharge by the storage battery assembly 104 reaches the discharge lower limit or the charge reaches the charge upper limit, the entire charge-discharge control command S1 has a content "set the charge-discharge to a standby state (or, charge or discharge with 0 kW)" or the like.

The master controller 22 is a control device which has functionality for receiving the entire charge-discharge control command S1 from the system controller 20 and sending an assembly charge-discharge control command S5 for each power converter 28 to the power converter managing part 26.

The master controller 22 receives power converter management data S4 as the status data of the power converter 28 from the power converter managing part 26 and unit status data S3 indicating a state of each of the storage battery units 40 from the sub-controller 24 provided in each storage battery unit 40 included in the storage battery assembly 104. The master controller 22 sends the assembly charge-discharge control command S5 containing any of a start instructing command for instructing each power converter 28 to start, a standby instructing command for instructing each power converter 28 to stand by, and a stop instructing command for instructing each power converter 28 to stop on the basis of the received unit status data S3 to the power converter managing part 26. Moreover, the assembly charge-discharge control command S5 contains a target charge-discharge power for controlling the charge-discharge by each power converter 28 as needed. Further, the master controller 22 determines, on the basis of the power converter management data S4 and the unit status data S3, whether or not the entire charge-discharge control command S1 sent from the system controller 20 can be performed, and sends the assembly charge-discharge control command S5 to the power converter managing part 26 on the basis of the determined result. This determination may be made by subjecting the unit status data S3 and the like to a predetermined conditional expression, for example. In the case where the entire charge-discharge control command S1 cannot be performed due to capacity constraints of the power converter or safety constraints, the master controller 22 restricts a charge-discharge amount to a performable level and sends the assembly charge-discharge control command S5 to the power converter managing part 26. Alternatively, the master controller 22 may be controlled to not send the assembly charge-discharge control command S5. If the entire charge-discharge control command S1 cannot be performed as commanded, that result may be sent by the master controller 22 to the storage battery power management device 12.

The entire charge-discharge control command S1 is a command value indicating the charge-discharge amount of the entire storage battery assembly 104 which is sent to the master controller 22. The assembly charge-discharge control command S5 is a command value obtained by dividing the command value of the entire charge-discharge control command S1 for each power converter 28. In the case where eight power converters 28 are provided for the power converter managing part 26 as shown in FIG. 2, if the entire charge-discharge control command S1 has a content "discharge at 320 kW for 1800 seconds", the assembly charge-discharge control command S5 is to have a content "discharge a first power converter 28 at 40 kW, discharge a second power converter 28 at 40 kW, ... discharge an eighth power converter 28 at 40 kW". In this specific example, the individual command value of the assembly charge-discharge control command S5 is a value obtained by dividing the command value of the entire charge-discharge control command S1 by the number of power converters 28, but other individual command values may be applied. For example, in the case where information that there is a failure in any of the power converters 28 controlled by the power converter managing part 26 is sent using the power converter management data S4, or in the case where there a storage battery control group 42 exists that is not connected with the power converter 28 due to an open/close state or failure of the selecting switch SW1, the assembly charge-discharge control command S5 having the content in which a part of the charge-discharge of the entire charge-discharge control command S1 is restricted is sent to the power converter managing part 26. Specifically, the master controller 22 generates the assembly charge-discharge control command S5 for controlling other power converters 28 than those having the failure such that the charge-discharge state required by the entire charge-discharge control command S1 is satisfied depending on the number of the storage battery control groups 42 connected to the relevant power converters 28 without the failure, and outputs the generated command to the power converter managing part 26.

Moreover, the master controller 22 outputs a switch control signal S10 to the sub-controller 24 to control a connection of the storage battery control group 42 to the power input/output line L1 for performing the charge-discharge.

For example, the master controller 22 receives the unit status data S3 from the sub-controller 24 of each storage battery unit 40, counts, for each power converter 28, the number of the storage battery control groups 42 which have an output voltage falling within a predetermined voltage range ΔV, changes in sequence a connection candidate voltage as a reference for the voltage range ΔV such that the number of the storage battery control groups 42 which have the output voltage falling within a certain voltage range ΔV becomes the largest number, and selects the storage battery control group 42 as a group. Then, the master controller 22 outputs the switch control signal S10 for setting the selecting switch SW1 corresponding to the selected storage battery control group 42 into the closed state with respect to the sub-controller 24 of the storage battery unit 40 including the selected storage battery control groups 42. The sub-controller 24 receives the switch control signal S10 to control the selecting switch SW1, which is instructed to be set to the closed state by the switch control signal S10, to be in the closed state. Further, the master controller 22 may update the open/close control signal for the selecting switch SW1 with respect to the sub-controller 24 in response to the unit status data S3 when the state of each storage battery control group 42 is changed owing to a transition of the charge-discharge.

However, the method for controlling the sub-controller 24 by the master controller 22 is not limited thereto, and any method may apply so long as the charge-discharge process suitable as the power supply system 100 may be performed on the basis of the entire charge-discharge control command S1, the power converter management data S4 and the unit status data S3.

Moreover, the master controller 22 sends data having the same content as the power converter management data S4, which is received from the power converter managing part 26, as the power converter management data S7 to the storage battery power management device 12. Here, instead of indirectly sending the power converter management data S7 from the power converter managing part 26 via the master controller 22 to the power management device 110a including the storage battery power management device 12, the daya may be directly sent from the power converter managing part 26 to the power management device 110a including the storage battery power management device 12.

Further, the master controller 22 sends data having the same content as the unit status data S3 indicating the status of each storage battery unit 40, which is received from the sub-controller 24, as the unit status data S6 to the storage battery power management device 14.

The sub-controller 24 is provided for each storage battery unit 40, and controls the open/closed state of the switches included in the switch circuit 30 provided for each storage battery unit 40 in accordance with the switch control signal S10, which is from the master controller 22, and the state of each storage battery unit 40.

When power (not shown) is turned on, the sub-controller 24 sets a unit switch SW3 in the switch circuit 30 shown in FIG. 4 to the closed state to connect the storage battery unit 40 to the power converter 28. Here, a time at which to set the unit switch SW3 to the closed state may be after the storage battery control group 42 described later is connected to the power input/output line L1. Additionally, the sub-controller 24 controls the unit switch SW3 in the switch circuit 30 depending on the current value, voltage value, temperature and abnormal signal acquired from the storage battery unit 40 and the storage battery control group 42. The control of the switch circuit 30 by the sub-controller 24 is described later.

Moreover, the sub-controller 24 outputs the data and abnormal signal output from the storage battery unit 40, storage battery control group 42, and storage battery pack 44 as well as the charge-discharge state (SOC: State Of Charge) calculated from the data as the unit status data S3 to the master controller 22. In the case where the storage battery unit 40 constituting the storage battery assembly 104 suffers a failure, the sub-controller 24 sends information for specifying the abnormal storage battery unit 40 in a state of being contained in the unit status data S3. Further, the sub-controller 24 receives a switch status signal indicating the open/closed state of the switch from the selecting switch SW1, switch SW2, and unit switch SW3 included in the storage battery unit 40, and outputs the information in a state of being contained in the unit status data S3 to the master controller 22.

The power converter managing part 26 receives the assembly charge-discharge control command S5 from the master controller 22 to control each of the power converters 28 to be controlled. In the power supply system 100 according to the embodiment, as shown in FIG. 2, the number of power converters 28 to be controlled by the power converter managing part 26 is eight. However, the number of the power converters 28 is not limited thereto and may be changed appropriately. The management process for the power converter 28 in the power converter managing part 26 is described later.

The power converter 28 performs the power conversion between AC power of the grid power source 108 and DC power of the storage battery assembly 104, the power conversion between DC power of the storage battery assembly 104 and AC power of the load 110, and so on. Specifically, the power converter 28 includes a bidirectional DC/AC conversion circuit, as needed.

The power converter managing part 26, according to the assembly charge-discharge control command S5, controls the power conversion and voltage conversion in each power converter 28 when the storage battery assembly 104 is charged from the photovoltaic cell system 106 and the grid power source 108, and the storage battery assembly 104 is discharged to the load 110. In addition, in the case where a failure has occurred in any of the power converters 28 under the control of the power converter managing part 26, and the master controller 22 has output a inhibiting command or standby command for the charge-discharge, the power converter managing part 26 puts the operation of the power converter 28 that is in the failure state into the standby state and sends information indicating the failure of the power converter 28 as the power converter management data S4 to the master controller 22.

For example, as shown in FIG. 2, in the case where eight power converters 28 are provided and the assembly charge-discharge control command S5 has the content "discharge a first power converter 28 at 40 kW, discharge a second power converter 28 at 40 kW, ... discharge an eighth power converter 28 at 40 kW", the power converter managing part 26 controls the voltage conversion and power conversion in the respective power converters 28 such that power is supplied from each power converter 28 to the load 110 at 40 kW. Further, in the case where the assembly charge-discharge control command S5 has the content "charge a first power converter 28 at 40, kW, charge a second power converter 28 at 40 kW, ... charge an eighth power converter 28 at 40 kW", the power converter managing part 26 controls the voltage conversion and power conversion in the respective power converters 28 such that the charge is performed via each power converter 28 at 40 kW from the photovoltaic cell system 106 and the grid power source 108.

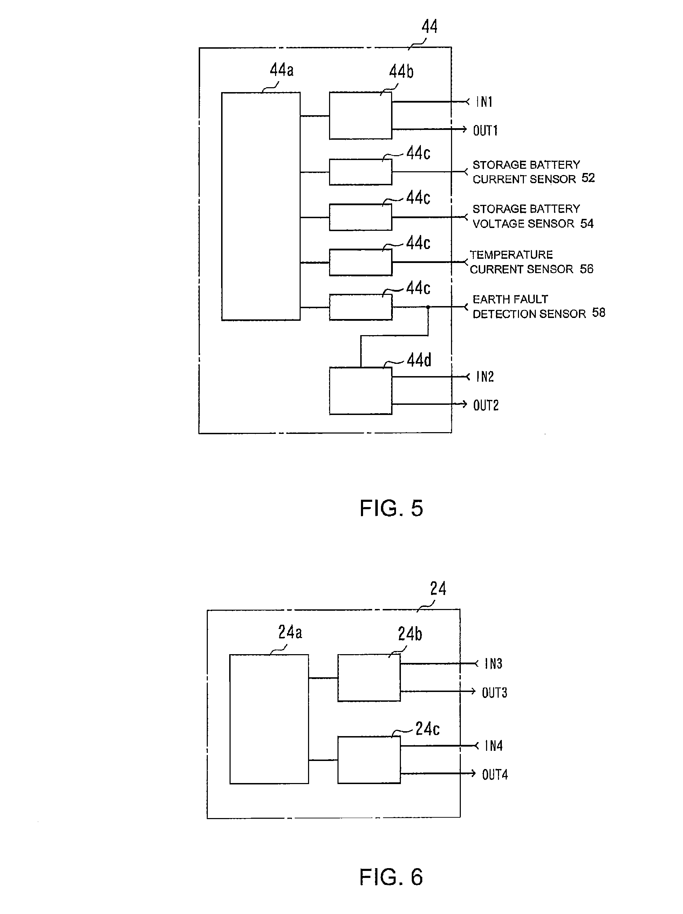

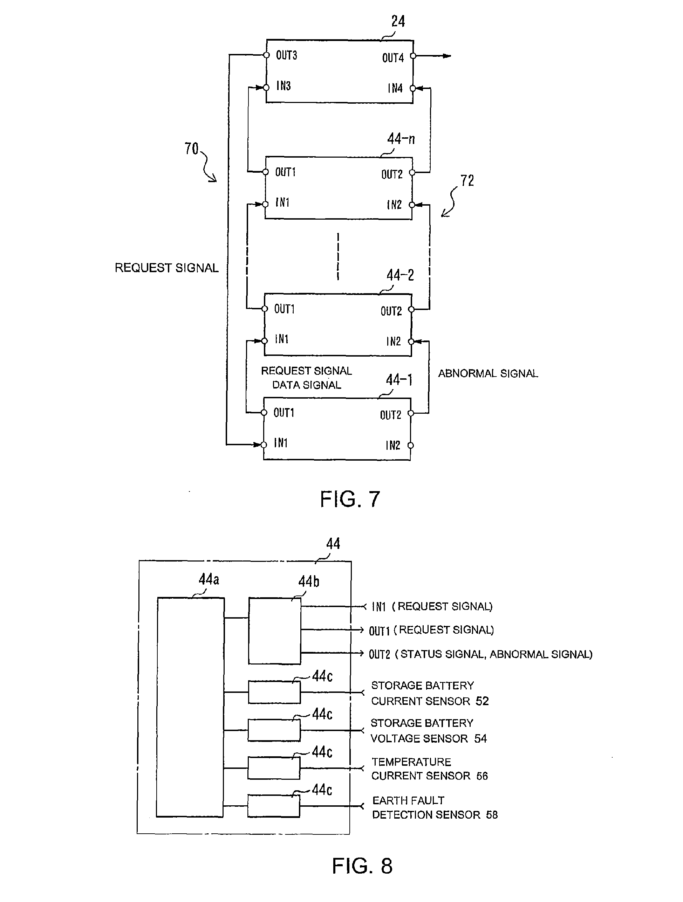

Subsequently, a description will be given of communication between the sub-controller 24 and the storage battery assembly 104. FIG. 5 shows a configuration example of a control system of the storage battery pack 44. FIG. 6 shows a configuration example of a control system of the sub-controller 24. FIG. 7 shows a configuration of connection between the sub-controller 24 and the storage battery assembly 104.

### [First embodiment]

### <First communication system>

The storage battery pack 44 includes a digital processing part 44a, an optical conversion module 44b, an analog/digital converter (ADC) 44c, and an abnormal signal outputting interface 44d, as shown in FIG. 5.

The storage battery pack 44 performs a process in which when a request signal is received from outside, data which is measured by various sensors provided therein is output as a status signal in response to the request signal.

The request signal is received at an input terminal IN1 in the optical conversion module 44b as an optical signal. The optical conversion module 44b converts the request signal, which is the optical signal, into an electrical signal to be output to the digital processing part 44a. The digital processing part 44a, when receiving the request signal, acquires via the ADC 44c the various data measured by the storage battery current sensor 52, storage battery voltage sensor 54, temperature sensor 56, and earth fault detection sensor 58 which are provided inside the storage battery pack 44. The ADC 44c converts the various data measured by the storage battery current sensor 52, storage battery voltage sensor 54, temperature sensor 56, and earth fault detection sensor 58 from an analog signal into a digital signal, and inputs the resultant signal to the digital processing part 44a. The digital processing part 44a converts the input various data into the status signal having a data format which can be communicated by way of an optical communication network of an optical fiber or the like, and outputs the resultant signal to the optical conversion module 44b. The optical conversion module 44b converts the input information from the electrical signal into the optical signal and outputs the resultant signal to the optical fiber connected with an output terminal OUT1.

The storage battery pack 44 also has functionality for transferring information output from another storage battery pack 44 (containing the request signal). As described above, when the information output from the storage battery pack 44 to the optical fiber is received as the optical signal at the input terminal IN1 of the optical conversion module 44b, the optical conversion module 44b converts the received information as the optical signal into the electrical signal, and outputs the resultant signal to the digital processing part 44a. The digital processing part 44a, if determining that the input information is information from another storage battery pack 44, once again outputs the information to the optical conversion module 44b. The optical conversion module 44b converts the input information from the electrical signal into the optical signal and outputs the resultant signal from the output terminal OUT1 to the optical fiber. Here, the information to be transferred may undergo the transferring process by the optical conversion module 44b without being temporarily transferred to the digital processing part 44a.

Here, the digital processing part 44a, the optical conversion module 44b and the analog/digital converter (ADC) 44c may be supplied with the power source for operation from the storage battery pack 44 itself having those therein.

On the other hand, the storage battery pack 44 outputs information required to be processed with high urgency, such as the earth fault and the like. as the abnormal signal. The abnormal signal is output via the abnormal signal outputting interface 44d. For example, if there is a state in which an earth fault is detected by an earth fault sensor, or there is a state in which an abnormal signal indicating abnormality is input from another storage battery pack 44 to the input terminal IN2, the abnormal signal indicating abnormality is output from the output terminal OUT2 of the abnormal signal outputting interface 44d.

The abnormal signal may be a signal which is at a low level at normal time and at a high level at an abnormal time, for example. In this case, if the state is in the abnormal state, the abnormal signal set to the high level is output from the output terminal OUT2, and if not, the abnormal signal set to the low level is output. Additionally, the abnormal signal may be a signal obtained by converting the analog signal itself output from the earth fault detection sensor and the like from the electrical signal into the optical signal in the optical conversion module 44b.

Here, the abnormal signal in this embodiment is an earth fault detection signal only, but is not limited thereto. For example, an overcurrent sensor or overvoltage sensor is provided for each the storage battery pack 44, and if a predetermined overcurrent reference value or overvoltage reference value is exceeded, the abnormal signal may be output. For example, the temperature sensor 56 is provided for each storage battery pack 44, and if a predetermined abnormal heat generation reference value is exceeded, the abnormal signal may be output.

FIG. 6 shows a configuration example of the sub-controller 24 according to the embodiment. The sub-controller 24 includes a digital processing part 24a, an optical conversion module 24b and an abnormal signal processing circuit 24c.

The digital processing part 24a in the sub-controller 24 outputs the request signal, for requesting the status signal (such as the unit status data S3) to be sent, to the storage battery pack 44 connected therewith. For example, the digital processing part 24a outputs the request signal to the optical conversion module 24b at predetermined intervals of time or irregular intervals of time. The optical conversion module 24b converts the request signal received from the digital processing part 24a from the electrical signal into the optical signal, and outputs the resultant signal from an output terminal OUT3.

The digital processing part 24a in the sub-controller 24 also receives, from the storage battery pack 44 connected therewith, the data measured by the various sensors as the status signal. The status signal output from each storage battery pack 44 in response to the above request signal is input to an input terminal IN3 of the optical conversion module 24b. The optical conversion module 24b converts the status signal input to the input terminal IN3 from the optical signal into the electrical signal, and outputs the resultant signal to the digital processing part 24a. This allows the digital processing part 24a to receive the data measured by the various sensors as the status signal from the storage battery pack 44.

As shown in FIG. 7, the output terminal OUT3 of the optical conversion module 24b in the sub-controller 24 is connected with the input terminal IN1 of the optical conversion module 44b in a first stage storage battery pack 44-1. The output terminal OUT1 of the optical conversion module 44b in each of the first and subsequent storage battery packs 44 is connected with the input terminal IN1 of the optical conversion module 44b in the next stage storage battery pack 44. Further, the output terminal OUT1 of the optical conversion module 44b in the last stage storage battery pack 44-n is connected with the input terminal IN3 of the optical conversion module 24b in the sub-controller 24. That is, each storage battery pack 44 and the sub-controller 24 are provided with a first communication line 70 which is connected using a daisy chain connection.

The connection configuration like this allows the request signal which is output from the sub-controller 24 in the above request signal output process to be transferred in sequence from the first stage storage battery pack 44-1 toward the later stage storage battery pack 44. Additionally, the status signal containing the data measured by the various sensors which is output from each storage battery pack 44 is transferred in sequence to the later stage storage battery pack 44, input to the input terminal IN3 of the optical conversion module 24b in the sub-controller 24, and received by the digital processing part 24a.

Moreover, the sub-controller 24 sends the various data received from the storage battery pack 44 as the unit status data S3 to the master controller 22. The digital processing part 24a brings together the status signal received as described above, and outputs the resultant signal as the unit status data S3 at predetermined intervals of time or irregular intervals of time to the optical conversion module 24b. The optical conversion module 24b converts the unit status data S3 received from the digital processing part 24a from the electrical signal into the optical signal, and outputs the resultant signal from the output terminal OUT3.

Additionally, the sub-controller 24 receives the switch control signal S10 from the master controller 22, and controls the open/closed state of the switch included in the switch circuit 30 in accordance with the received switch control signal S10. The switch control signal S10 is input to the input terminal IN3 of the optical conversion module 24b. The optical conversion module 24b converts the data input to the input terminal IN3 from the optical signal into the electrical signal, and outputs the resultant signal to the digital processing part 24a. This allows the digital processing part 24a to receive the switch control signal S10.

For example, the master controller 22 selects the storage battery control groups 42 which have an output voltage falling within a predetermined voltage range ΔV as described above, outputs the switch control signal S10 for connecting those storage battery control groups 42 to the power input/output line L1. The sub-controller 24, when receiving the switch control signal S10, sets the selecting switch SW1 into the closed state which is connected with the selected storage battery control group 42 in accordance with the switch control signal S10 to connect the selecting switch SW1 with the power input/output line L1.

Further, the sub-controller 24 determines the state of the storage battery unit 40 on the basis of the various data contained in the status signal received from the storage battery pack 44, and may control the switch circuit 30 independently of the master controller 22 if the failure or abnormality occurs in the state of the storage battery unit 40. For example, if the failure occurs in the storage battery unit 40, the unit switch SW3 is set to the open state to break the connection between the storage battery unit 40 and the power converter 28.

Moreover, the sub-controller 24 may determine the state of the storage battery pack 44 or storage battery control group 42 on the basis of the various data contained in the status signal received from the storage battery pack 44, and may perform the open/close control on the selecting switch SW1 (SW1(1) to SW1(4)) corresponding to the storage battery control group 42 depending on the determination result.

For example, the sub-controller 24 determines whether or not the failure occurs in the state of the storage battery pack 44 or storage battery control group 42 on the basis of the information such as the current value detected by the storage battery current sensor 52, the voltage value detected by the storage battery voltage sensor 54, the temperature detected by the temperature sensor 56 and the earth fault state detected by the earth fault detection sensor. The sub-controller 24, if occurrence of failure has been determined, performs a process for disconnecting the storage battery control group 42 including the storage battery pack 44 having the failure from the power input/output line L1. Specifically, the open state is set for the selecting switch SW1 (SW1(1) to SW1(4)) corresponding to the storage battery control group 42 including the storage battery pack 44 which has the failure. In addition, the sub-controller 24 sends the information indicating the failure of the storage battery pack 44 or storage battery control group 42 as the unit status data S3 to the master controller 22.

The determination of the failure may be performed by comparing with a predetermined condition, such as the case where a current detected by the storage battery current sensor 52 falls outside a threshold range calculated from a predetermined condition expression, the case where a cell voltage detected by the storage battery voltage sensor 54 falls outside a predetermined threshold range, and the case where a pack temperature detected by the temperature sensor 56 falls outside a predetermined threshold range.

Additionally, the sub-controller 24 receives the abnormal signal from storage battery pack 44 connected therewith and performs an abnormal handling process in accordance with the abnormal signal. As shown in FIG. 7, the output terminal OUT2 of the abnormal signal outputting interface 44d in the storage battery pack 44 is connected with the input terminal IN2 of the abnormal signal outputting interface 44d in the next stage storage battery pack 44. Further, the output terminal OUT2 of the abnormal signal outputting interface 44d in the last stage storage battery pack 44 is connected with an input terminal IN4 of the abnormal signal processing circuit 24c in the sub-controller 24. That is, each storage battery pack 44 and the sub-controller 24 are provided with a second communication line 72 which is connected using a daisy chain connection. The connection configuration like this allows the abnormal signal output from each storage battery pack 44 to be input to the abnormal signal processing circuit 24c in the sub-controller 24.

The abnormal signal processing circuit 24c, which is a hardware circuit constituted by logic circuits in combination or like, achieves a more reliable and higher speed process than the digital processing part 24a when the abnormal signal is indicating abnormality.

For example, the abnormal signal processing circuit 24c, when receiving the abnormal signal indicating abnormality with the level varying from the low level to the high level, outputs to the switch circuit 30 a signal for setting the open state for the selecting switch SW1 (SW1(1) to SW1(4)) corresponding to the storage battery control group 42 including the storage battery pack 44 which has the abnormality detected.

In addition, the abnormal signal processing circuit 24c may have a configuration in which a signal indicating receipt of the abnormal signal is output to the digital processing part 24a. This allows the digital processing part 24a to perform a process for sending the information indicating that the abnormal signal is output as the unit status data S3 to the master controller 22, and the like.

Here, the process in accordance with the abnormal signal may be performed without via the abnormal signal processing circuit 24c. For example, when the abnormal signal becomes the high level, the switch circuit 30 may be provided with an emergency cutoff circuit for setting the open state for the selecting switch SW1 (SW1(1) to SW1(4)) corresponding to the storage battery control group 42 including the storage battery pack 44 as a target of the abnormal signal.

According to the embodiment, the communication between the sub-controller 24 and the storage battery pack 44 is established as an optical communication system using the optical fiber. Since the optical communication system has excellent resistance to noise and electrical insulation compared with the communication system using the metal wiring of related art, the noise superimposition or insulation abnormality can be prevented from occurring even if the number of the stages of the storage battery connected in series is increased to increase the output voltage.

In addition, since the communication line for the ordinary communication data such as the current, voltage, temperature and the like is constructed separately from the communication line for the abnormal signal informing of the abnormality of the storage battery pack 44 as a distinct system, transmission of the abnormal signal and the abnormal handling process in accordance with the abnormal signal can be performed reliably and quickly. Particularly, in the case where the optical conversion module 44b and any of the analog/digital converters (ADC) 44c in the storage battery pack 44 are supplied with the power source from the storage battery pack 44 itself, if the power source supply is stopped as a result of abnormality of the storage battery pack 44, the communication via the above components is likely to be disabled. Accordingly, communicating the abnormal signal via the independent communication line makes it possible to maintain the abnormal signal communication in an established state even if functions of the optical conversion module 44b and analog/digital converter (ADC) 44c are stopped.

Here, in the embodiment, the communication between the sub-controller 24 and the storage battery pack 44 is established as the optical communication system using the optical fiber, but is not limited thereto. For example, it may be established as a communication system using the metal wiring. In this case, the optical conversion module 24b in the sub-controller 24 and the optical conversion module 44b in the storage battery pack 44 may be not provided and an interface part required for the communication of the electrical signal by the metal wiring may be provided, as needed, to establish the communication.

### <Second communication system>

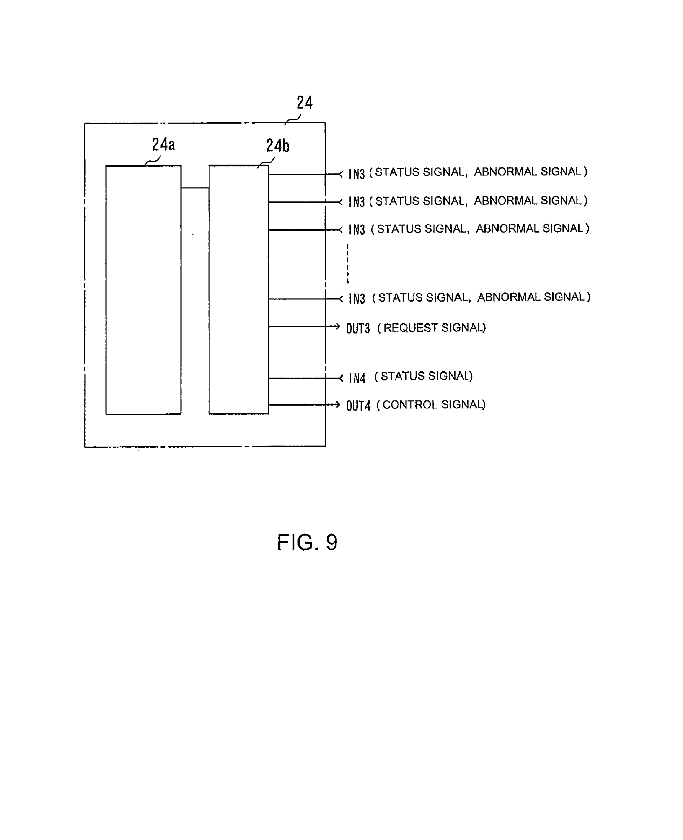

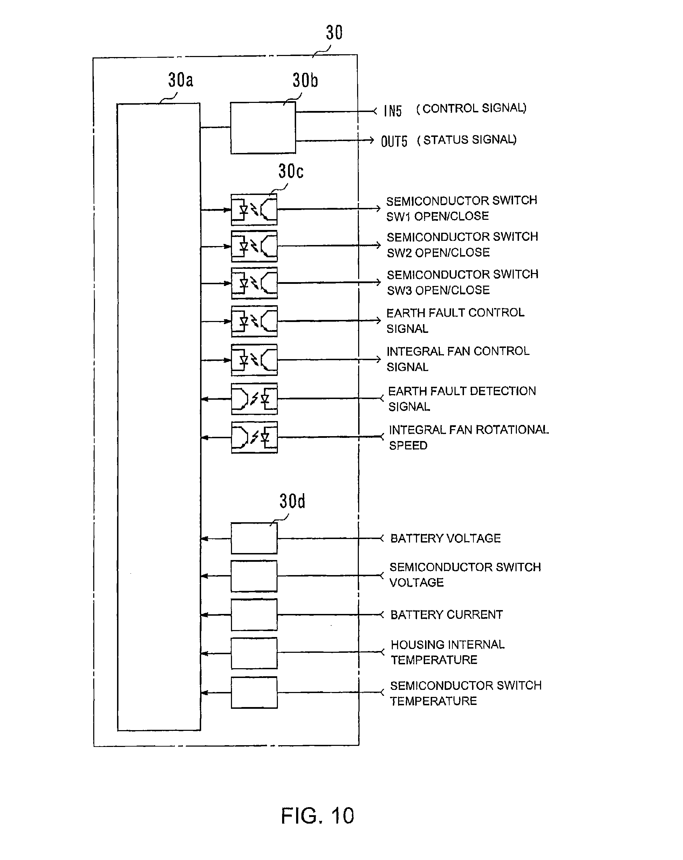

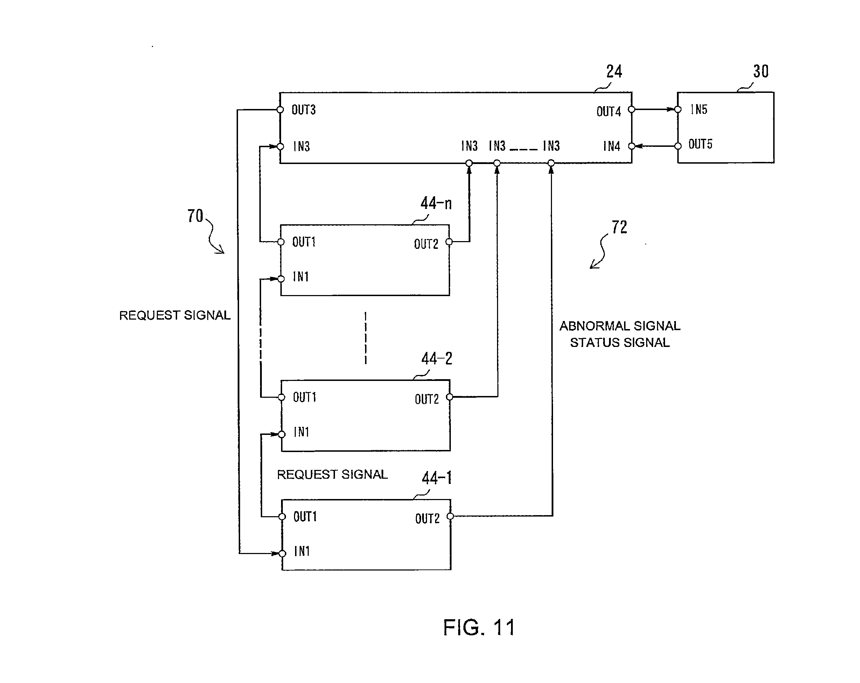

Next, a description will be given of communication between the sub-controller 24, the switch circuit 30, and the storage battery assembly 104 in a second communication system. FIG. 8 shows a configuration example of a control system of the storage battery pack 44. FIG. 9 shows a configuration example of a control system of the sub-controller 24. FIG. 10 shows a configuration example of a control system of the switch circuit 30. FIG. 11 shows a configuration of interconnection between the sub-controller 24, the switch circuit 30, and the storage battery assembly 104.

The storage battery pack 44 includes the digital processing part 44a, the optical conversion module 44b, and the analog/digital converter (ADC) 44c, as shown in FIG. 8. Hereinafter, only the functionalities that are different from the first communication system will be described.

The storage battery pack 44 outputs information required to be processed with high urgency, such as the earth fault and the like, as the abnormal signal. For example, when the earth fault sensor detects the earth fault, the digital processing part 44a outputs the abnormal signal indicating abnormality to the optical conversion module 44b. The optical conversion module 44b converts the input abnormal signal from the electrical signal into the optical signal, and outputs the resultant signal to the optical fiber connected with the output terminal OUT2.

FIG. 9 shows a configuration example of the sub-controller 24 according to the embodiment. The sub-controller 24 includes the digital processing part 24a and the optical conversion module 24b. Hereinafter, only the functionalities that different from the first communication system will be described.

The digital processing part 24a in the sub-controller 24 receives from the storage battery pack 44 connected therewith the status signal or the abnormal signal. The status signal or the abnormal signal is input to the input terminal IN3 of the optical conversion module 24b. The optical conversion module 24b converts the information input to the input terminal IN3 from the optical signal into the electrical signal, and outputs the resultant signal to the digital processing part 24a. This allows the digital processing part 24a to receive the status signal or the abnormal signal. The number of the input terminals IN3 to be provided is equal to or more than the number of the storage battery packs 44 to be controlled by the sub-controller 24.

Moreover, the digital processing part 24a in the sub-controller 24 sends a control signal to the switch circuit 30. For example, the digital processing part 24a outputs the control signal in accordance with the switch control signal S10 received from the master controller 22 to the optical conversion module 24b at predetermined intervals of time or irregular intervals of time. The optical conversion module 24b converts the control signal received from the digital processing part 24a from the electrical signal into the optical signal, and outputs the resultant signal from the output terminal OUT4.

Further, the digital processing part 24a in the sub-controller 24 receives the status signal from the switch circuit 30. The status signal is input to the input terminal IN4 of the optical conversion module 24b. The optical conversion module 24b converts the status signal input to the input terminal IN4 from the optical signal into the electrical signal, and outputs the resultant signal to the digital processing part 24a. This allows the digital processing part 24a to receive the status signal from the switch circuit 30.

FIG. 10 shows a configuration example of the switch circuit 30 according to the embodiment. The switch circuit 30 includes a digital processing part 30a, an optical conversion module 30b, a photocoupler 30c, and an analog/digital converter (ADC) 30d. Here the photocoupler 30c and the ADC 30d are provided respectively for each selecting switch SW1 or each storage battery control group 42, but only one system is representatively shown in FIG. 10 for the purpose of brief illustration.

The digital processing part 30a in the switch circuit 30 receives the control signal from the sub-controller 24. The control signal is input to the input terminal IN5 of the optical conversion module 30b. The optical conversion module 30b, when receiving the control signal, converts the received control signal from the optical signal into the electrical signal, and outputs the resultant signal to the digital processing part 30a. This allows the digital processing part 30a to receive the control signal from the sub-controller 24.

Further, the digital processing part 30a in the switch circuit 30 outputs the status signal indicating the state of the switch circuit 30 to the sub-controller 24. The digital processing part 30a acquires, via the ADC 30d, the various data measured by the voltage sensor, current sensor, and temperature sensor which are provided inside the switch circuit 30. For example, as shown in FIG. 2, the voltage sensor (not shown) is provided between the breaker BR and the selecting switch SW1 (SW1(1) to SW1(4)) to measure a voltage at that position of the voltage sensor as a battery voltage. In addition, the voltage sensor (not shown) is provided between the selecting switch SW1 (SW1(1) to SW1(4)) and the unit switch SW3 to measure a voltage at an output terminal of the selecting switch SW1 (SW1(1) to SW1(4)) as a semiconductor switch voltage. Further, the current sensor (not shown) is provided at the output terminal of the storage battery control group 42 to measure an output current of the storage battery control group 42 as a battery current. Additionally, the temperature sensor (not shown) is provided inside a housing of the switch circuit 30 or in the vicinity of the selecting switch SW1 to measure a housing internal temperature or a semiconductor switch temperature. The ADC 30d converts these various measured data from the analog signal into the digital signal, and inputs the resultant signal to the digital processing part 30a. The digital processing part 30a converts the various input data into the status signal having a data format which can be communicated by way of an optical communication network of an optical fiber or the like, and outputs the resultant signal to the optical conversion module 30b. The optical conversion module 30b converts the input information from the electrical signal into the optical signal, and outputs the resultant signal to the optical fiber connected to the output terminal OUT5.

The sub-controller 24, switch circuit 30, and storage battery pack 44 which have the configurations described above are connected with one another as shown in FIG. 11.

As shown in FIG. 11, the input terminal IN4 of the optical conversion module 24b in sub-controller 24 is connected with the output terminal OUT5 of the optical conversion module 30b in the switch circuit 30 through the optical fiber, and the output terminal OUT4 of the optical conversion module 24b in the sub-controller 24 is connected with the input terminal IN5 of the optical conversion module 30b in the switch circuit 30 through the optical fiber. This achieves the communication between the sub-controller 24 and the switch circuit 30 through the optical fiber communication network.

Moreover, the output terminal OUT3 of the optical conversion module 24b in the sub-controller 24 is connected with the input terminal IN1 of the optical conversion module 44b in the first stage storage battery pack 44-1. Additionally, the output terminal OUT1 of the optical conversion module 44b in each of the first and subsequent storage battery packs 44 is connected with the input terminal IN1 of the optical conversion module 44b in the next stage storage battery pack 44. The output terminal OUT1 of the optical conversion module 44b in the last stage storage battery pack 44-n is connected with the input terminal IN3 of the optical conversion module 24b in the sub-controller 24. That is, each storage battery pack 44 and the sub-controller 24 are provided with the first communication line 70 which is connected using a daisy chain connection.

The connection configuration like this allows the request signal which is output from the sub-controller 24 in the above request signal output process to be transferred in sequence from the first stage storage battery pack 44-1 toward the later stage storage battery pack 44.

Moreover, as shown in FIG. 11, the output terminal OUT2 of the optical conversion module 44b in each storage battery pack 44 is connected with the input terminal IN3 of the optical conversion module 24b in the sub-controller 24. That is, each storage battery pack 44 and the sub-controller 24 are provided with the second communication line 72 connected in parallel connection. The connection configuration like this allows the status signal or abnormal signal output from each storage battery pack 44 to be input to the digital processing part 24a in the sub-controller 24.

Moreover, the sub-controller 24 sends the various data received from the storage battery pack 44 as the unit status data S3 to the master controller 22. The digital processing part 24a brings together the status signal received as described above, and outputs the resultant signal as the unit status data S3 at predetermined intervals of time or irregular intervals of time to the optical conversion module 24b. The optical conversion module 24b converts the unit status data S3 received from the digital processing part 24a from the electrical signal into the optical signal, and sends the resultant signal to the master controller 22.

The power supply system 100 is controlled in the communication system configuration like this. For example, the digital processing part 24a in the sub-controller 24, when receiving the switch control signal S10 for connecting the storage battery control group 42 selected in the master controller 22 to the power input/output line L1, outputs to the switch circuit 30 the control signal for setting the closed state for the selecting switch SW1 connected with the storage battery control group 42 which is selected in accordance with the switch control signal S10. The switch circuit 30 receives the control signal and performs outputting to the photocoupler 30c so as to set the close state to the selecting switch SW1 designated by the control signal to set the selecting switch SW1 to the closed state.

In addition, the digital processing part 24a in the sub-controller 24 may determine the state of the storage battery unit 40 or switch circuit 30 on the basis of the various data contained in the status signal received from the storage battery pack 44 or the switch circuit 30 to control the switch circuit 30 independently of the master controller 22. For example, if a failure or abnormality occurs in the state of the storage battery unit 40, the unit switch SW3 may be set to the open state to break the connection between the storage battery unit 40 and the power converter 28.

Moreover, the digital processing part 24a in the sub-controller 24 may determine the state of the storage battery pack 44 or storage battery control group 42 on the basis of the various data contained in the status signal received from the storage battery pack 44, and may perform the open/close control on the selecting switch SW1 (SW1(1) to SW1(4)) corresponding to storage battery control group 42 depending on the determination result.

Specifically, for example, the digital processing part 24a in the sub-controller 24 determines whether or not the failure occurs in the state of the storage battery pack 44 or storage battery control group 42 on the basis of the information such as the current value detected by the storage battery current sensor 52, the voltage value detected by the storage battery voltage sensor 54, the temperature detected by the temperature sensor 56, and the earth fault state detected by the earth fault detection sensor. The sub-controller 24, if it has been determined that the failure has occurred, performs a process for disconnecting the storage battery control group 42 including the storage battery pack 44 having the failure from the power input/output line L1. That is, the open state is set for the selecting switch SW1 (SW1(1) to SW1(4)) corresponding to the storage battery control group 42 including the storage battery pack 44 which has the failure.

The determination of the failure may be performed by comparing with a predetermined condition such as the case where a current detected by the storage battery current sensor 52 falls outside a threshold range calculated from a predetermined condition expression, the case where a cell voltage detected by the storage battery voltage sensor 54 falls outside a predetermined threshold range, and the case where a pack temperature detected by the temperature sensor 56 falls outside a predetermined threshold range.

Additionally, the digital processing part 24a in the sub-controller 24 may receive the abnormal signal from the storage battery pack 44 connected therewith and perform an abnormal handling process in accordance with the abnormal signal. For example, when the abnormal signal varies from the low level to the high level, a signal is output to the switch circuit 30 which is for setting the open state for the selecting switch SW1 (SW1(1) to SW1(4)) corresponding to the storage battery control group 42 including the storage battery pack 44 which has the abnormality detected.

Here, the process in accordance with the abnormal signal may be performed not via the digital processing part 24a. For example, the switch circuit 30 may be provided with an emergency cutoff circuit for setting, when the abnormal signal becomes the high level, the open state for the selecting switch SW1 (SW1(1) to SW1(4)) corresponding to the storage battery control group 42 including the storage battery pack 44 as a target of the abnormal signal.

Further, in accordance with the status signal received from the switch circuit 30, if the failure or abnormality occurs in the switch circuit 30, the unit switch SW3 may be set to the open state to break the connection between the storage battery unit 40 and the power converter 28. Moreover, in accordance with the status signal received from the switch circuit 30, the state of the output voltage of the storage battery control group 42 or the selecting switch SW1 (SW1(1) to SW1(4)) may be determined to perform the open/close control on the selecting switch SW1 (SW1(1) to SW1(4)) depending on the determination result.

More specifically, for example, the switch circuit 30 may be controlled such that the selecting switch SW1 (SW1(1) to SW1(4)) is set to the open state depending on a predetermined condition such as the case where a battery voltage contained in the status signal from the switch circuit 30 falls outside a threshold range calculated from a predetermined condition expression, the case where a potential difference between a battery voltage and a semiconductor switch voltage falls outside a predetermined threshold range, the case where a battery current falls outside a predetermined threshold range, and the case where a housing internal temperature or a semiconductor switch temperature falls outside a predetermined threshold range.

Note that, as shown in FIG. 10, the switch circuit 30 may perform the control by earth fault detection or the control by an integral fan and the like in the digital processing part 30a independently of the sub-controller 24.

### <Third communication system>

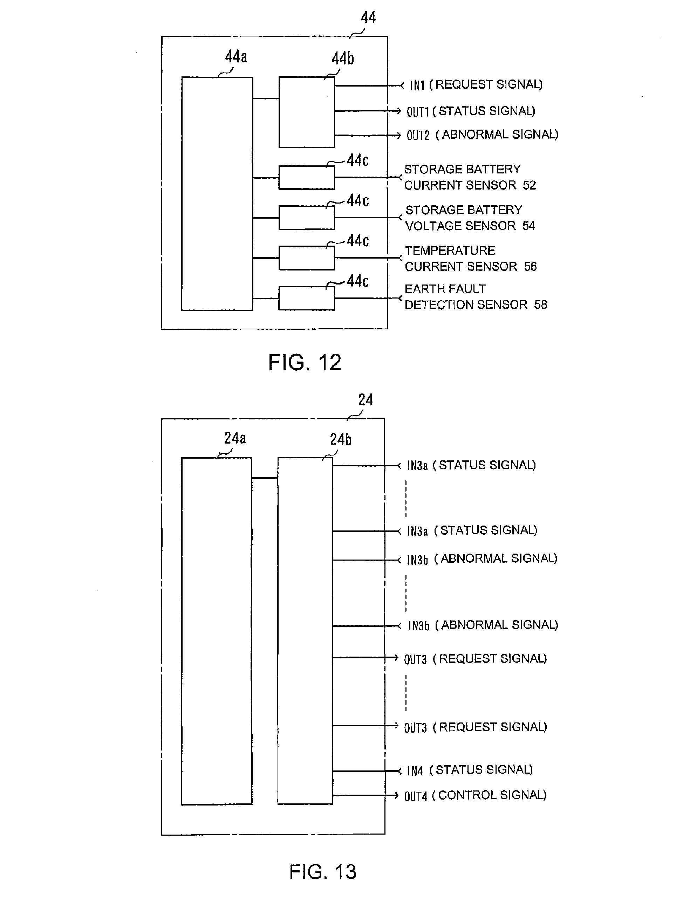

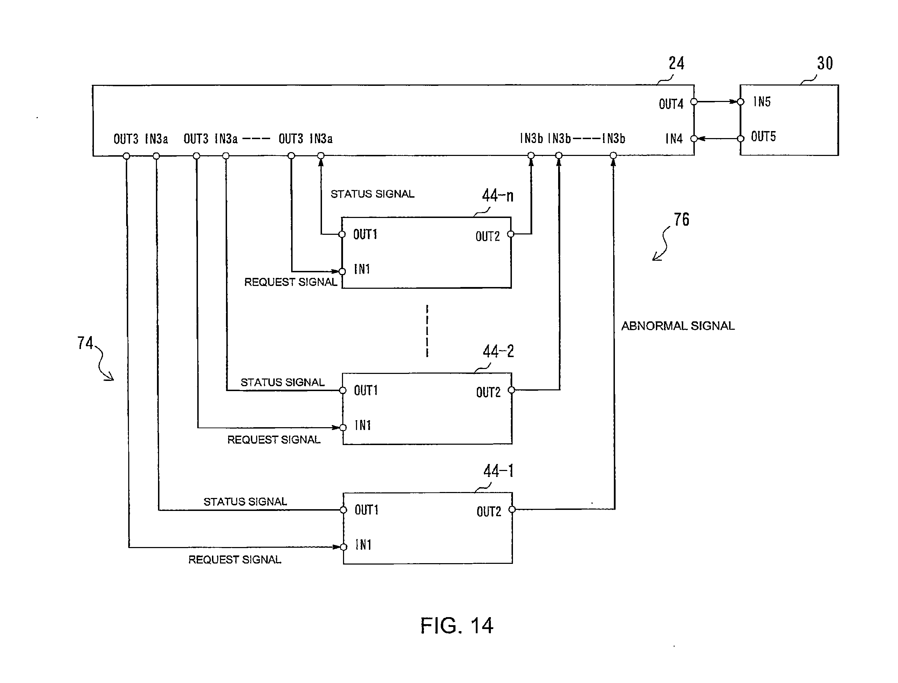

Next, a description will be given of communication between the sub-controller 24, the switch circuit 30 and the storage battery assembly 104 in a third communication system. This embodiment is different from the second communication system in the connection between the sub-controller 24 and the storage battery pack 44, and an information processing method thereof. A configuration of a control system of the switch circuit 30 is similar to the second communication system and the description thereof is omitted. FIG. 12 shows a configuration example of a control system of the storage battery pack 44. FIG. 13 shows a configuration example of a control system of the sub-controller 24. FIG. 14 shows a configuration of interconnection between the sub-controller 24, the switch circuit 30, and the storage battery assembly 104.

The storage battery pack 44 includes, similarly to the second communication system, the digital processing part 44a, the optical conversion module 44b, and the analog/digital converter (ADC) 44c, as shown in FIG. 12.

The storage battery pack 44 of the third communication system performs a process in which, when receiving a request signal from outside, data which is measured by various sensors provided therein is output as a status information from the output terminal OUT1 of the optical conversion module 44b in response to the request signal.

Additionally, the storage battery pack 44 outputs information required to be processed with high urgency such as the earth fault and the like as the abnormal signal from the output terminal OUT2 of the optical conversion module 44b. The output of the abnormal signal is similar to the second communication system, and the description thereof is omitted.

FIG. 13 shows a configuration example of the sub-controller 24 according to the embodiment. The sub-controller 24 includes, similar to the second communication system, the digital processing part 24a and the optical conversion module 24b. The optical conversion module 24b is directly connected with a plurality of storage battery packs 44.

The digital processing part 24a in the sub-controller 24 sends to each storage battery pack 44 connected therewith the request signal for requesting the status signal to be sent. The optical conversion module 24b converts the request signal received from the digital processing part 24a from the electrical signal into the optical signal, and outputs the resultant signal from the output terminal OUT3 provided for each storage battery pack 44 to be controlled.

Additionally, the digital processing part 24a in the sub-controller 24 receives from each storage battery pack 44 connected therewith the status signal or the abnormal signal. The status signal is input to the input terminal IN3a of the optical conversion module 24b. The optical conversion module 24b converts the information input to the input terminal IN3a from the optical signal into the electrical signal, and outputs the resultant signal to the digital processing part 24a. This allows the digital processing part 24a to receive the status signal. The number of the input terminals IN3a to be provided is equal to or more than the number of the storage battery packs 44 to be controlled by the sub-controller 24. The abnormal signal is input to an input terminal IN3b of the optical conversion module 24b. The optical conversion module 24b converts the information input to the input terminal IN3b from the optical signal into the electrical signal, and outputs the resultant signal to the digital processing part 24a. This allows the digital processing part 24a to receive the abnormal signal. The number of the input terminals IN3b to be provided is equal to or more than the number of the storage battery packs 44 to be controlled by the sub-controller 24.

The processes of sending the control signal to the switch circuit 30 and receiving the status signal from the switch circuit 30 in the sub-controller 24 are similar to the second communication system, and the description thereof is omitted.

The sub-controller 24, the switch circuit 30, and the storage battery pack 44 are connected with one another as shown in FIG. 14. Here, the connection configuration between the sub-controller 24 and the switch circuit 30, and a control method thereof, are similar to the second communication system, and the description thereof is omitted.

Additionally, each of the output terminals OUT3 of the optical conversion module 24b in the sub-controller 24 is connected with the input terminal IN1 of the optical conversion module 44b in each storage battery pack 44. The output terminal OUT1 of the optical conversion module 44b in each storage battery pack 44 is connected with the input terminal IN3a of the optical conversion module 24b in the sub-controller 24. That is, each storage battery pack 44 and the sub-controller 24 are provided with a third communication line 74 connected in parallel connection.

Further, the output terminal OUT2 of the optical conversion module 44b in each storage battery pack 44 is connected with the input terminal IN3b of the optical conversion module 24b in the sub-controller 24. That is, each storage battery pack 44 and the sub-controller 24 are provided with a forth communication line 76 connected in parallel connection.

The configuration like this also makes it possible to control the power supply system 100 in this communication system similar to the second communication system.

### <Fourth communication system>

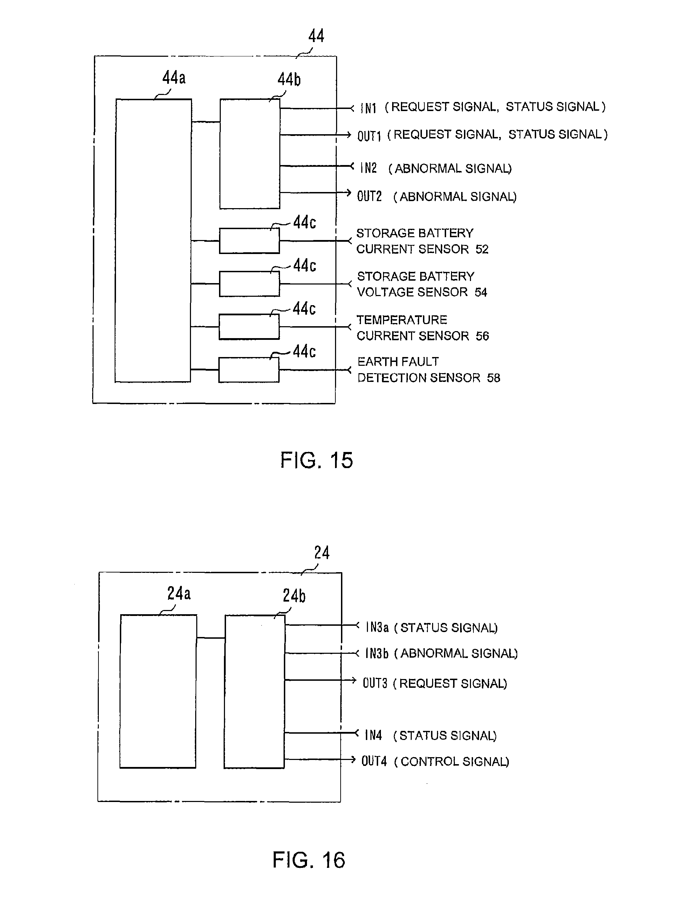

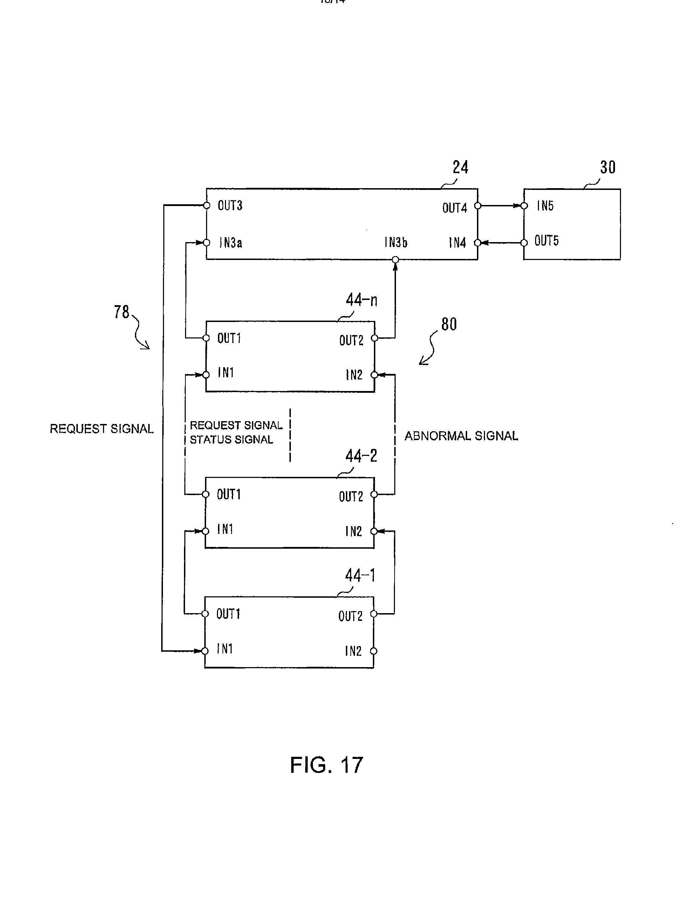

Next, a description will be given of communication between the sub-controller 24, the switch circuit 30 and the storage battery assembly 104 in a fourth communication system. A configuration of a control system of the switch circuit 30 is similar to the second communication system, and the description thereof is omitted. FIG. 15 shows a configuration example of a control system of the storage battery pack 44. FIG. 16 shows a configuration example of a control system of the sub-controller 24. FIG. 17 shows a configuration of interconnection between the sub-controller 24, the switch circuit 30 and the storage battery assembly 104.

The storage battery pack 44 includes, similarly to the second communication system, the digital processing part 44a, the optical conversion module 44b, and the analog/digital converter (ADC) 44c, as shown in FIG. 15. However, the optical conversion module 44b is provided with the input terminal IN2, which is different from the second embodiment.

The storage battery pack 44 of the fourth communication system performs a process in which when receiving a request signal at the input terminal IN1 of the optical conversion module 44b from outside, data which is measured by various sensors provided therein is output as status information from the output terminal OUT1 of the optical conversion module 44b in response to the request signal.

The receiving of the request signal from the sub-controller 24 is similar to the second communication system, and the description thereof is omitted. In addition, the digital processing part 44a sends a status signal in association with receiving the request signal. The sending of the status signal is similar to the second communication system, and the description thereof is omitted.

Moreover, the storage battery pack 44 outputs information required to be processed with high urgency, such as the earth fault and the like, as the abnormal signal. The outputting the abnormal signal is similar to the second communication system, and the description thereof is omitted.

Further, the storage battery pack 44 also has functionality for transferring the abnormal signal output from another storage battery pack 44. When the abnormal signal is received as the optical signal at the input terminal IN2 of the optical conversion module 44b, the optical conversion module 44b converts the abnormal signal which is the optical signal into the electrical signal, and outputs the resultant signal to the digital processing part 44a. The digital processing part 44a, when receiving the abnormal signal, once again outputs the received signal to the optical conversion module 44b. The optical conversion module 44b converts the abnormal signal from the electrical signal into the optical signal, and outputs the resultant signal from the output terminal OUT2 to the optical fiber. Here, the request signal may undergo the transferring process by the optical conversion module 44b without being temporarily transferred to the digital processing part 44a.

FIG. 16 shows a configuration example of the sub-controller 24 according to the embodiment. The sub-controller 24 includes the digital processing part 24a and the optical conversion module 24b.

The digital processing part 24a in the sub-controller 24 sends, to each storage battery pack 44 connected therewith, the request signal for requesting the status signal to be sent. For example, the digital processing part 24a outputs the request signal to the optical conversion module 24b at predetermined intervals of time or irregular intervals of time. The optical conversion module 24b converts the request signal received from the digital processing part 24a from the electrical signal into the optical signal, and outputs the resultant signal from the output terminal OUT3 provided for each storage battery pack 44 to be controlled.

Additionally, the digital processing part 24a in the sub-controller 24 receives from each storage battery pack 44 connected therewith the status signal or the abnormal signal. The status signal is input to the input terminal IN3a of the optical conversion module 24b. The optical conversion module 24b converts the information input to the input terminal IN3a from the optical signal into the electrical signal, and outputs the resultant signal to the digital processing part 24a. This allows the digital processing part 24a to receive the status signal. The abnormal signal is input to an input terminal IN3b of the optical conversion module 24b. The optical conversion module 24b converts the information input to the input terminal IN3b from the optical signal into the electrical signal, and outputs the resultant signal to the digital processing part 24a. This allows the digital processing part 24a to receive the abnormal signal.

The processes of sending the control signal to the switch circuit 30 and receiving the status signal from the switch circuit 30 in the sub-controller 24 are similar to the second communication system, and the description thereof is omitted.

The sub-controller 24, the switch circuit 30, and the storage battery pack 44 are connected with one another as shown in FIG. 17. Here, the connection configuration between the sub-controller 24 and the switch circuit 30, and a control method thereof, are similar to the second communication system, and the description thereof is omitted.

The output terminal OUT3 of the optical conversion module 24b in the sub-controller 24 is connected with the input terminal IN1 of the optical conversion module 44b in the first stage storage battery pack 44-1. Additionally, the output terminal OUT1 of the optical conversion module 44b in each of the first and subsequent storage battery packs 44 is connected with the input terminal IN1 of the optical conversion module 44b in the next stage storage battery pack 44. The output terminal OUT1 of the optical conversion module 44b in the last stage storage battery pack 44-n is connected with the input terminal IN3a of the optical conversion module 24b in the sub-controller 24. That is, each storage battery pack 44 and the sub-controller 24 are provided with a fifth communication line 78 which is connected using a daisy chain connection.

The connection configuration like this allows the request signal which is output from the sub-controller 24 in the above request signal output process to be transferred in sequence from the first stage storage battery pack 44-1 toward the later stage storage battery pack 44. Additionally, the status signal output from each storage battery pack 44 is transferred to the sub-controller 24 by the later stage storage battery pack 44.

Additionally, the output terminal OUT2 of the storage battery pack 44 is connected with the input terminal IN2 of the next stage storage battery pack 44. Further, the output terminal OUT2 of the last stage storage battery pack 44-n is connected with the input terminal IN3b of the sub-controller 24. That is, each storage battery pack 44 and the sub-controller 24 are provided with a sixth communication line 80 which is connected using the daisy chain connection. The connection configuration like this allows the abnormal signal output from each storage battery pack 44 to be transferred to the sub-controller 24 by the later stage storage battery pack 44.

The configuration like this also makes it possible to control the power supply system 100 in this communication system similar to the second communication system.

### <Operation, effect>

According to the embodiments, communication among the sub-controller 24, the switch circuit 30, and the storage battery pack 44 is implemented as an optical communication system using optical fiber. That is, compared with the power supply system using the metal wiring of related art, the power supply system 100 has improved resistance to noise and improved electrical insulation. Particularly, in the case where the number of stages of the storage battery connected in series is increased to increase the output voltage, the noise superimposition or insulation abnormality can be prevented from occurring in the communication system including the sub-controller 24, switch circuit 30, and storage battery pack 44 which are prone to be affected by the wiring of the electrical power system.

In the second communication system, the request signal is communicated between the sub-controller 24 and the storage battery pack 44 through the first communication line 70 which is connected using the daisy chain connection, and the status signal and the abnormal signal are communicated through the second communication line 72 connected in parallel connection.

In such a configuration, the status signal and the abnormal signal are directly sent to the sub-controller 24 without passing through a transmission path by way of a plurality of storage battery packs 44. Accordingly, the status signal and the abnormal signal can be promptly sent and received between the storage battery pack 44 and the sub-controller 24.

Moreover, compared with the case where the connections between the sub-controller 24 and the storage battery pack 44 are all connected in parallel, the number of terminals of the sub-controller 24 and the number of cables of the optical fiber can be decreased. This can achieve a decrease in the number of connecting steps and a reduction of manufacturing cost. Additionally, a burden of the photoelectric conversion processing by the sub-controller 24 is reduced in the first communication line 70, suppressing power consumption in the optical communication by the sub-controller 24.

Further, each storage battery pack 44 does not need to perform the process for transferring the status signal and abnormal signal, equalizing the power consumption in respective storage battery packs 44.

In the third communication system, the request signal, the status signal, and the abnormal signal are all communicated between the sub-controller 24 and the storage battery pack 44 through the third communication line 74 and fourth communication line 76 which are connected in parallel.

In such a configuration, the request signal, the status signal, and the abnormal signal are directly sent to the sub-controller 24 without passing through a transmission path by way of a plurality of storage battery packs 44. Accordingly, the request signal, the status signal, and the abnormal signal can be promptly interchanged between the storage battery pack 44 and the sub-controller 24.

Further, each storage battery pack 44 does not need to perform the process for transferring the request signal, the status signal, and the abnormal signal, equalizing the power consumption in respective storage battery packs 44.

In the fourth communication system, the request signal is communicated between the sub-controller 24 and the storage battery pack 44 through the fifth communication line 78 which is connected using the daisy chain connection, and the status signal and the abnormal signal are communicated through the sixth communication line 80 which is connected using the daisy chain connection.

In such a configuration, compared with the case where the connection between the sub-controller 24 and the storage battery pack 44 is connected in parallel, the number of terminals of the sub-controller 24 and the number of cables of the optical fiber can be decreased. This can achieve decrease in the number of connecting steps and a reduction of manufacturing cost. Additionally, a burden of the photoelectric conversion processing by the sub-controller 24 is reduced, suppressing power consumption in the optical communication by the sub-controller 24.

### [Second embodiment]

In the first embodiment, the description is given of the configuration in which one storage battery unit 40 is provided with a plurality of storage battery control groups 42 in parallel, and further, one power converter 28 is connected with a plurality of storage battery units 40 in parallel, but the configuration is not limited thereto.

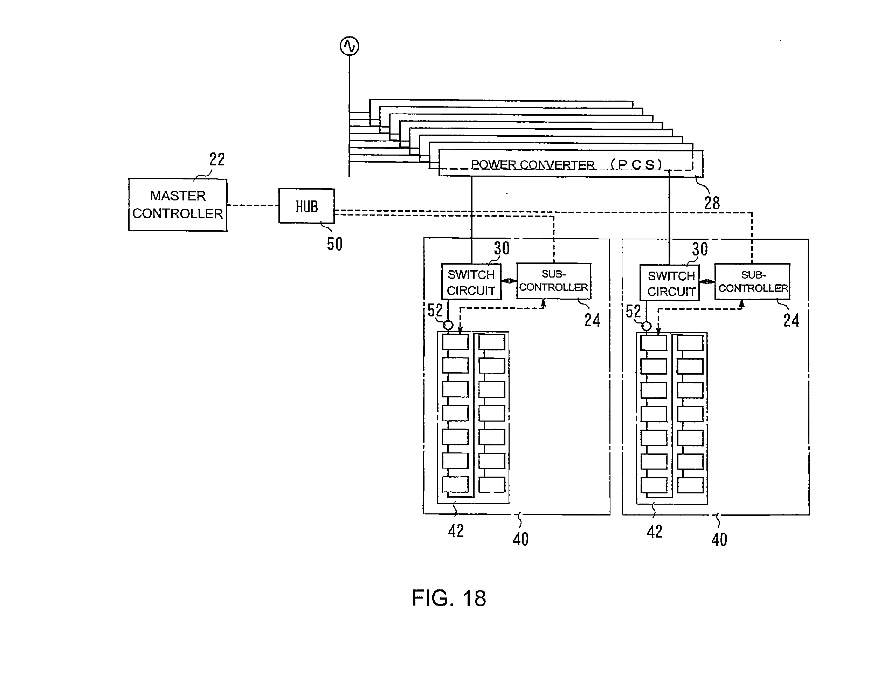

FIG. 18 shows a configuration of the power supply system according to the second embodiment. In the embodiment, one storage battery unit 40 is provided with only one storage battery control group 42, and one power converter 28 is connected with one storage battery unit 40. The configuration etc. of the storage battery control group 42 is similar to the first embodiment.

In such a configuration, the connection form and control of a plurality of storage battery packs 44 in the storage battery unit 40 may be adopted similarly to the first embodiment.

### REFERENCE SIGNS LIST

10 load power management device, 12 storage battery power management device, 14 total power monitoring device, 20 system controller, 22 master controller, 24 sub-controller, 24a digital processing part, 24b optical conversion module, 24c abnormal signal processing circuit, 26 power converter managing part, 28 power converter, 30 switch circuit, 30a digital processing part, 30b optical conversion module, 40 storage battery unit, 42 storage battery control group, 44 storage battery pack, 44a digital processing part, 44b optical conversion module, 44c analog/digital converter (ADC), 44d abnormal signal outputting interface, 46 storage battery cell, 52 storage battery current sensor, 54 storage battery voltage sensor, 56 temperature sensor, 58 earth fault detection sensor, 70 first communication line, 72 second communication line, 74 third communication line, 76 fourth communication line, 78 fifth communication line, 80 sixth communication line, 100 power supply system, 102 power supply management system, 104 storage battery assembly, 106 photovoltaic cell system, 108 grid power source, 110 load, 110a power management device

## Claims

1. A power supply system, comprising:
a storage battery pack that includes at least one storage battery cell, and outputs a status signal indicating a state of the storage battery cell and an abnormal signal indicating abnormality;
a controller that receives the status signal and the abnormal signal from the storage battery pack, and controls charge-discharge of the storage battery pack;
a first communication line for sending a request signal and the status signal from the controller to the storage battery pack, the request signal requesting the storage battery pack to send the status information; and
a second communication line for sending the abnormal signal from the storage battery pack to the controller, and provided separately from the first communication line.

2. The power supply system according to claim 1, wherein communication through a first communication line is performed using digital communication,
communication through a second communication line is performed using analog communication, and
the storage battery pack includes a digital processing part for performing the communication through the first communication line using digital communication.

3. The power supply system according to claim 2, wherein the digital processing part operates with power from a storage battery cell included in the storage battery pack.

4. The power supply system according to claim 1, wherein the controller controls a plurality of the storage battery packs, and
a plurality of the storage battery pack are connected with the controller in series through the first communication line.

5. The power supply system according to claim 1, wherein the controller controls a plurality of the storage battery packs,
a plurality of the storage battery packs are connected with the controller in series through the second communication line.

6. The power supply system according to claim 1, wherein
a power input/output line is connected with a plurality of the storage battery packs in parallel, and a switch circuit switches connections between the power input/output line and the storage battery packs,
wherein the switch circuit
receives a control signal from the controller to control a connection state between the power input/output line and the storage battery, and
directly receives the abnormal signal from the storage battery to control a connection state between the power input/output line and the storage battery.

7. The power supply system according to claim 1, wherein at least part of communication between the controller and the storage battery pack and at least part of communication between the controller and the switch circuit are performed using optical fibers.
